# EUROPEAN PATENT SPECIFICATION

(11) **EP 2 178 386 B1**
(45) Date of publication and mention of the grant of the patent: **03.11.2010**
(21) Application number: 08766865.3
(22) Date of filing: 02.07.2008
(51) Int. Cl.: A23D 9/00

(54) **FRYING FAT COMPOSITION**
FRITTIERFETTZUSAMMENSETZUNG
COMPOSITION DE GRAISSE À FRIRE

(30) Priority: 02.07.2007 EP 07111494
(43) Date of publication of application: 28.04.2010
(73) Proprietor: Sime Darby Malaysia Berhad, Kuala Lumpur, 50350 (MY)
(72) Inventor: KREEKEL, Harry Roelof, NL-3076 CW Rotterdam (NL); SAARI, Hisfazilah, NL-3011 EW Rotterdam (NL); ZIEVERINK, Martinus Mathilda Pieter, NL-2613 RM Delft (NL); DE RUITER, Gerhard Adriaan, NL-5473 JE Heeswijk-Dinther (NL)
(74) Representative: Ketelaars, Maarten F.J.M.
(86) International application number: PCT/NL2008/050442
(87) International publication number: WO 2009/005352

(56) References cited:
- US-A- 3 423 213
- US-A- 4 399 165
- US-A- 4 504 499
- US-A- 5 718 940

## Description

### TECHNICAL FIELD OF THE INVENTION

The present invention relates to a frying fat composition, especially a frying fat composition that can be used to produce fried foods, such as French fries, potato chips and doughnuts, having a reduced acrylamide content.

### BACKGROUND OF THE INVENTION

The formation of acrylamide (CH₂=CH-(CO)-NH₂) in heated foodstuffs has become a major concern since this compound is regarded as a possible carcinogenic.

Acrylamide was accidentally discovered in foods in April 2002 by Swedish scientists (Tareke E, Rydberg P. et al. (2002). "Analysis of acrylamide, a carcinogen formed in heated foodstuffs". J. Agric. Food. Chem. 50 (17): 4998-5006). Tareke et al. found considerable amounts of acrylamide in starchy foods, such as potato chips, French fries and bread that had been heated. They also showed that production of acrylamide in the heating process is temperature-dependent and that acrylamide is not found in food products which have been boiled nor in foodstuffs that have not been heated.

Acrylamide is thought to be generated during heat treatment as a result of the Maillard reaction between amino acids and reducing sugars. It is considered that many amino acids contribute to acrylamide formation, with asparagine being the major contributor. Plant materials such as potatoes are more particularly affected with acrylamide formation since about one third total amino acids are in free form in potato.

Researchers have been investigating the possibilities of reducing the acrylamide content in foods. However, there are difficulties in modifying the chemistry of uncooked foods. For instance, it is difficult to adjust the quantities of chemicals that naturally occur in foods, particularly where the chemicals are amino acids, such as asparagine, which are essential building blocks of plants. Amino acids are very abundant in cells and are assembled into proteins, which are responsible for plant cell structure and function. It is difficult to obtain foods that have modified amino acid chemistry but retain favourable taste, smell, colour, texture and chemical properties.

US 2004/0115321 describes a method for preventing acrylamide formation in a food product that is heat-treated, which method comprises blocking conversion of glycerol in acrylamide by removing free amino acids and/or metallic ions and/or free radicals, e.g. by contacting with silica gel or ion exchange resin.

US 2005/0153022 describes a process for deep-frying a material to be deep-fried in a heat transfer fluid, the process comprising cooking the material to be deep fried at a consecutively decreasing temperature of the heat transfer liquid. This process is said to make possible an especially gentle cooking operation that reduces formation of acrylamide to a minimum.

US 2006/0147606 describes a process for the preparation of ready to cook French fried potatoes which process comprises chopping potatoes, fermenting the chopped potatoes with a lactic acid producing microorganism and frying the fermented chopped potatoes. It is stated in the US patent application that the acrylamide content of French fries can be reduced by treatment of French fries prior to cooking with lactic acid bacteria and/or with acid.

As will be clear from the above, the processes described in the cited prior art publications are laborious and/or difficult to implement. Hence, there is a need for an alternative approach that effectively minimises acrylamide formation in fried foodstuffs and that can easily be implemented.

### SUMMARY OF THE INVENTION

The present invention provides a frying fat composition that can be used in conventional frying operations, using standard frying temperatures and that yields fried foods containing reduced levels of acrylamide. More particularly, the present inventors have developed a frying fat composition that enables preparation of high quality fried foodstuffs using shortened frying times. By decreasing frying times levels of acrylamide in the final fried product can be reduced substantially.

The inventors have discovered that in conventional frying processes the final stage of the frying process has little or no influence on the taste and texture of the fried product, but that it does have a significant effect on the appearance of the product. During the final stage of the frying process browning reactions occur that affect the colour of the fried product. Thus, in order for e.g. French fries and potato chips to attain a desirable golden colour, frying needs to be continued for a longer period of time than is necessary for achieving other quality determining attributes. Starting from these findings, the inventors have hypothesized that if the desired product appearance could be realised with a shorter frying time, this would enable the preparation of fried foodstuffs of high quality whilst at the same time achieving a substantial reduction in acrylamide levels in the final fried product.

The inventors have subsequently discovered that the desired product appearance can be achieved with shorter frying times by incorporating into the frying fat composition from 5 to 100 mg/kg of β-carotene. β-carotene, being highly conjugated, is deeply colored, and as a hydrocarbon lacking fuctional groups, it is very lipophilic. The incorporation of 5-100 mg/kg of β-carotene in the present frying fat composition imparts an intense yellow/orange colour to said frying fat.

Although the inventors do not wish to be bound by theory, it is believed that during frying in the present frying fat composition β-carotene is absorbed by or adsorbed onto the surface of the fried foodstuff. As a result, the fried foodstuff achieves the desirable fried appearance at an earlier stage of frying, meaning that the frying time and consequently the acrylamide content of the fried product can be reduced substantially.

Unrefined palm oil has a reddish colour because it contains a high amount of β-carotene. Mildly refined palm oil (also called red palm oil) has been used as a cooking oil. The present invention encompasses frying fat compositions that contain a certain amount of red palm oil and/or red palm oil fraction as a source of β-carotene in combination with at least 70 wt.% of refined fat.

### DETAILED DESCRIPTION OF THE INVENTION

Accordingly, one aspect of the present invention relates to a frying fat composition comprising at least 70 wt.% of refined fat and from 5 to 100 mg/kg, preferably from 6-50 mg/kg of β-carotene. Most preferably, the present frying fat composition contains 10-50 mg/kg of β-carotene.

Unless indicated otherwise, the terms "oil" and "fat" as used herein are deemed to be synonyms and encompass lipids such as triglycerides, diglycerides, monoglycerides and phosphoglycerides. Preferably, the refined fat employed in accordance with the present invention is a triglyceride fat, i.e. a fat containing at least 95 wt.% of triglycerides.

The term "refined fat" as used herein refers to a fat or fat blend that has undergone deodorisation and decolourisation (e.g. bleaching). Typically, the refined fat employed in the present frying fat composition contains less than 3 mg/kg of β-carotene. More preferably, the refined fat employed in the present frying fat composition contains less than 1 mg/kg of β-carotene.

The term "red palm oil component" as used herein refers to a palm oil or palm oil fraction containing the colouring substances naturally present in unrefined palm oil. Typically, the red palm oil, component employed in the present invention contains at least 100 mg/kg, more preferably at least 200 mg/kg of carotenoids, selected from α-carotene, β-carotene and combinations thereof. According to a particularly preferred embodiment, the red palm oil component contains at least 100 mg/kg, most preferably at least 150 mg/kg of β-carotene. The red palm oil component may suitably have been submitted to mild refining, such as deodorisation.

The term "fatty acid" as used herein encompasses fatty acid residues contained, for instance, in triglycerides.

The N-value Nₜ equals the solid fat content of a fat at a temperature of t °C as measured by means of ISO 8292 - Animal and vegetable fats and oils - Determination of solid fat content - Pulsed nuclear magnetic resonance method.

Unless indicated otherwise, fatty acid concentrations are expressed as a percentage of the total weight of fatty acid residues and free fatty acids contained in the fat. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

The present frying fat composition may contain up to 25 wt.% of water. In case the frying fat composition is used in shallow frying, the presence of significant levels of water does not impair frying performance as the water evaporates quickly during heating. It is preferred, however, especially with a view to deep frying that the water content of the frying fat composition is limited. Preferably, the frying fat composition contains less than 3 wt.%, most preferably less than 2 wt.% of water.

The β-carotene in the frying fat composition may be of synthetic or natural origin. According to a particularly preferred embodiment, the β-carotene is provided by a red palm oil component. Thus, in according with an advantageous embodiment of the invention the frying fat composition contains 3-30 wt.%, more preferably 5-25 wt.% of a red palm oil component, said red palm oil component being selected from the group consisting of red palm, red palm oil fractions and combinations thereof. The use of a red palm oil component offers the advantage that such a component contains several components, such as α-carotene and vitamin E components, that are believed to enhance the stability and/or frying behaviour of the present frying fat composition.

According to a particularly preferred embodiment, the red palm oil component comprises a red palm olein fraction having an iodine value of at least 54. More specifically, it is preferred that the frying fat composition contains 3-20 wt.% of an olein fraction of red palm oil. Typically, the olein fraction of red palm oil has a melting point of less than 30 °C. During fractionation of red palm oil, the carotenoids, tocopherols and tocotrienols predominantly accumulate in the olein fraction. Hence, the olein fraction of red palm oil is an excellent source of β-carotene as well as of α-carotene, tocopherols and tocotrienols.

According to another preferred embodiment, the palm oil component contains a super olein fraction of red palm oil, said super olein fraction having an iodine value of at least 60, preferably of at least 62. A red palm super olein fraction is obtained by fractionating red palm olein into a palm mid fraction and a super olein fraction. The aforementioned super olein fraction is enriched in carotenoids, tocopherols and tocotrienols relative to the olein starting material. Thus, this super olein fraction is advantageously employed in the fyring fat composition as a source of carotenoids, tocopherols and tocotrienols. The frying fat composition of the present invention advantageously contains 3-12 wt.% of a super olein fraction of red palm oil.

Typically, the refined fat and the red palm oil component together represent at least 80 wt.% of the present frying fat composition. Even more preferably these two components together represent at least 90 wt.%, most preferably at least 95 wt.% of the frying fat composition.

Besides β-carotene the present frying fat composition preferably contains α-carotene and a vitamin E component as these components can substantially improve the frying behaviour and/or stability of the composition. Accordingly, the present fat composition advantageously contains 5-100 mg/kg of α-carotene and 20-400 mg/kg of one or more vitamin E components selected from the group consisting of tocopherols and tocotrienols.

The benefits of the present invention can be realised equally well in frying fat composition that are solid or liquid at ambient temperature. Liquid frying fat compositions usually suffer from the drawback that the unsaturated fatty acids contained therein are relatively unstable as they tend to oxidize and/or polymerize during prolonged frying. The incorporation of β-carotene, especially in the form of a red palm oil component, offers the advantage that it adds to the stability of frying fat compositions that contain significant levels of unsaturated fatty acids. Thus, in a preferred embodiment, the fat in the frying fat composition contains at least 60 wt.%, most preferably at least 75 wt.% of unsaturated fatty acids. Likewise it is preferred that the fat in the frying composition contains at most 40 wt.%, more preferably at most 25 wt.% of saturated fatty acids selected from the group consisting of palmitic acid, stearic acid and combinations thereof.

The frying fat composition can contain appreciable levels of vegetable fat components that contain relatively high levels of saturated fatty acids and/or that have a substantial solid fat content at ambient temperature. Preferably, the frying fat composition contains less than 25 wt.% of a structuring fat selected from the group consisting of palm oil, palm oil fractions, lauric fat, lauric fat fractions, fully hydrogenated vegetable oil, and combinations thereof.

The present frying fat composition preferably does not contain any partially hydrogenated fat, even more preferably it does not contain any partially or fully hydrogenated fat.

The fat in the present frying fat composition preferably has a solid fat content at 20 °C (N₂₀) of less than 15%, more preferably of less than 10%.

Another aspect of the present invention relates to a process of preparing a fried foodstuff by immersing a non-fried or pre-fried foodstuff for at least 10 seconds in a frying medium having a temperature in excess of 140 °C, preferably in excess of 160 °C, wherein the frying medium consists of a frying fat composition as defined herein before.

Examples of fried foodstuffs that may suitably be prepared by the present process include French fries, potato chips and doughnuts. Most preferably, the present process is used in the preparation of French fries or potato chips.

Typically, in the present process the fried foodstuff is prepared by immersing the non-fried or pre-fried foodstuff for at least 30 seconds, most preferably for at least 30 seconds in the frying medium. Advantageously, in the present process non-fried French fries are immersed in the frying medium for 1-6 minutes or pre-fried French fries are immersed in the frying medium for 1-5 minutes.

In a particularly preferred embodiment the present frying fat composition is employed in industrial pre-frying, using a relatively short pre-frying protocol. The resulting pre-fried foodstuffs can be distributed and stored in frozen form until they are finish-fried by e.g consumers or retail, using ordinary frying fats and ordinary frying conditions. Because the total frying time, i.e the time needed for pre- and finish-frying, can be reduced significantly in this fashion, a substantial reduction of the acrylamide content of the final fried product can be realised. Thus, in accordance with this advantageous embodiment the present process comprises immersing a non-fried foodstuff in the frying medium for at least 10 seconds to produce a pre-fried foodstuff, followed by packaging and freezing of the pre-fried foodstuff.

Yet another aspect of the invention relates to a method of preparing a frying fat composition as defined herein before, said process comprising blending 70 parts by weight of refined fat having a β-carotene content of less than 3 mg/kg, preferably of less than 1 mg/kg, with 2-30 parts by weight of red palm oil component selected from the group consisting of red palm, red palm oil fractions and combinations thereof.

The invention is further illustrated by means of the following examples.

### EXAMPLES

### Example 1

Commercially available pre-fried frozen French fries (ex Lamb Weston, Kruiningen, the Netherlands) were fried at a temperature of 175 °C for 3.5 to 6 minutes in two different frying fats. The composition of the frying fats is described in Table 1.

**Table 1**

| | Frying fat A | Frying fat B |
|---|---|---|
| Sunflower oil | 92.5 wt.% | 92.5 wt.% |
| Red palm super olein * | 7.5 wt.% | |
| Palm oil super olein ^{#} | | 7.5 wt.% |

| | | |
|---|---|---|
| * Iodine value = 64. melting point approximately 10 °C ^{#} Iodine value = 60, melting point less than 19 °C | | |

The composition of the red palm super olein in terms of carotenoids, tocopherol and tocotrienols is depicted in Table 2:

**Table 2**

| | Concentration (mg/kg) | |
|---|---|---|
| | Red palm super olein | Frying fat A |
| β-Carotene | 410 | 31 |
| α-Carotene | 270 | 20 |
| Tocopherol | 390 | 29 |
| Tocotrienol | 1400 | 105 |

Samples of French fries were removed during frying at regular intervals. Taste, texture and appearance of these samples were evaluated by an expert panel and the acrylamide levels were analysed.

It was found that a frying time of at least 3 minutes was necessary to obtain French fries having a crispy texture and pleasant taste. After 3 minutes the French fries obtained with frying fat B still had an unattractive pale yellowish colour. In contrast, the French fries obtained after 3 minutes frying in frying fat A had a colour that was similar to that of perfectly fried French fries. With frying fat A the best result was obtained after 3.5 minutes of frying. For frying fat B the optimum result was achieved after 4.5 minutes.

The effect of frying time on acrylamide levels in the French fries is depicted in Table 3.

**Table 3**

| Frying time | Acrylamide content (in µg/kg) | |
|---|---|---|
| | Frying fat A | Frying fat B |
| 3.5 minutes | 160 | 150 |
| 4.5 minutes | 220 | 290 |

As is evident from these results, the present invention enables the preparation of French fries that sensorially are indistinguishable from conventionally prepared French fries, but that contain significantly less acrylamide. More particularly, these results indicate that reductions in acrylamide levels of 40-50% can be achieved by the present invention without any quality loss.

## Claims

1. A frying fat composition comprising at least 70 wt.% of refined fat; 3-30 wt.% of a red palm oil-component, said red palm oil component being selected from the group consisting of red palm oil, red palm oil fractions and combinations thereof; and from 5 to 100 mg/kg, preferably from 6-50 mg/kg of β-carotene.

2. Frying fat composition according to claim 1, wherein the frying fat composition contains less than 3 wt.% of water.

3. Frying fat composition according to claim 1 or 2, wherein the frying fat composition contains 5-25 wt.% of a red palm oil component, said red palm oil component being selected from the group consisting of red palm oil, red palm oil fractions and combinations thereof.

4. Frying fat composition according to claim 3, wherein the frying fat composition contains 3-20 wt.% of an olein fraction of red palm oil, said olein fraction having an iodine value of at least 54.

5. Frying fat composition according to claim 3, wherein the frying fat composition contains 3-12 wt.% of a super olein fraction of red palm oil, said super olein fraction having an iodine value of at least 60.

6. Frying fat composition according to claim 4 or 5, wherein the olein fraction has a melting point of less than 30 °C.

7. Frying fat composition according to any one of the preceding claims, wherein the refined fat and the red palm oil component together represent at least 90 wt.% of the frying fat composition.

8. Frying fat composition according to any one of the preceding claims, wherein the composition contains 5-100 mg/kg of α-carotene, 4-80 mg/kg of β-carotene and 20-400 mg/kg of one or more vitamin E components selected from the group consisting of tocopherols and tocotrienols.

9. Frying fat composition according to any one of the preceding claims, wherein the fat in the frying fat composition has a solid fat content at 20 °C (N₂₀) of less than 15%.

10. Frying fat composition according to any one of the preceding claims, wherein the fat in the frying fat composition contains at least 60 wt.% of unsaturated fatty acids.

11. A process of preparing a fried foodstuff by immersing a non-fried or pre-fried foodstuff for at least 10 seconds in a frying medium having a temperature in excess of 140 °C, preferably in excess of 160 °C, wherein the frying medium consists of frying fat composition according to any one of the preceding claims.

12. Process according to claim 11, wherein the fried foodstuff is selected from the group consisting of French fries, potato chips and doughnuts.

13. Process according to claim 11 or 12, wherein the process comprises immersing a non-fried foodstuff in the frying medium for at least 10 seconds to produce a pre-fried foodstuff, followed by packaging and freezing of the pre-fried foodstuff.

14. A method for preparing a frying fat composition according to any one of claims 1-10, said process comprising blending 70 parts by weight of refined fat having a β-carotene content of less than 3 mg/kg with 2-30 parts by weight of red palm oil component selected from the group consisting of red palm, red palm oil fractions and combinations thereof.

## Patentansprüche

1. Frittierfettzusammensetzung umfassend wenigstens 70 Gew.-% raffiniertes Fett; 3-30 Gew.-% einer roten Palmölkomponente, wobei die rote Palmölkomponente ausgewählt ist aus der Gruppe bestehend aus rotem Palmöl, roten Palmölfraktionen und Kombinationen davon; und 5 bis 100 mg/kg, vorzugsweise 6-50 mg/kg β-Carotin.

2. Frittierfettzusammensetzung nach Anspruch 1, wobei die Frittierfettzusammensetzung weniger als 3 Gew.-% Wasser enthält.

3. Frittierfettzusammensetzung nach Anspruch 1 oder 2, wobei die Frittierfettzusammensetzung 5-25 Gew.-% einer roten Palmölkomponente enthält, wobei die rote Palmölkomponente ausgewählt ist aus der Gruppe bestehend aus rotem Palmöl, roten Palmölfraktionen und Kombinationen davon.

4. Frittierfettzusammensetzung nach Anspruch 3, wobei die Frittierfettzusammensetzung 3-20 Gew.-% einer Oleinfraktion von rotem Palmöl enthält, wobei die Oleinfraktion eine Iodzahl von wenigstens 54 aufweist.

5. Frittierfettzusammensetzung nach Anspruch 3, wobei die Frittierfettzusammensetzung 3-12 Gew.-% einer Superoleinfraktion von rotem Palmöl enthält, wobei die Superoleinfraktion eine Iodzahl von wenigstens 60 aufweist.

6. Frittierfettzusammensetzung nach Anspruch 4 oder 5, wobei die Oleinfraktion einen Schmelzpunkt von weniger als 30 °C aufweist.

7. Frittierfettzusammensetzung nach einem der vorangehenden Ansprüche, wobei das raffinierte Fett und die rote Palmölkomponente zusammen wenigstens 90 Gew.-% der Frittierfettzusammensetzung darstellen.

8. Frittierfettzusammensetzung nach einem der vorangehenden Ansprüche, wobei die Zusammensetzung 5-100 mg/kg α-Carotin, 4-80 mg/kg β-Carotin und 20-400 mg/kg von einer oder mehreren Vitamin E-Komponenten, ausgewählt aus der Gruppe bestehend aus Tocopherolen und Tocotrienolen, enthält.

9. Frittierfettzusammensetzung nach einem der vorangehenden Ansprüche, wobei das Fett in der Frittierfettzusammensetzung einen Festfettgehalt bei 20 °C (N₂₀) von weniger als 15 % aufweist.

10. Frittierfettzusammensetzung nach einem der vorangehenden Ansprüche, wobei das Fett in der Frittierfettzusammensetzung wenigstens 60 Gew.-% ungesättigte Fettsäuren enthält.

11. Verfahren zum Herstellen eines frittierten Nahrungsmittels durch Eintauchen eines nicht frittierten oder vorfrittierten Nahrungsmittels während wenigstens 10 Sekunden in ein Frittiermedium mit einer Temperatur von mehr als 140 °C, vorzugsweise mehr als 160 °C, wobei das Frittiermedium aus einer Frittierfettzusammensetzung nach einem der vorangehenden Ansprüche besteht.

12. Verfahren nach Anspruch 11, wobei das frittierte Nahrungsmittel ausgewählt ist aus der Gruppe bestehend aus Pommes Frites, Kartoffelchips und Krapfen bzw. Doughnuts.

13. Verfahren nach Anspruch 11 oder 12, wobei das Verfahren das Eintauchen eines nicht frittierten Nahrungsmittels in das Frittiermedium während wenigstens 10 Sekunden zum Herstellen eines vorfrittierten Nahrungsmittels, und anschließend das Verpacken und Gefrieren des vorfrittierten Nahrungsmittels umfasst.

14. Verfahren zum Herstellen einer Frittierfettzusammensetzung nach einem der Ansprüche 1-10, wobei das Verfahren das Mischen von 70 Gewichtsteilen eines raffinierten Fetts mit einem β-Carotingehalt von weniger als 3 mg/kg mit 2-30 Gewichtsteilen einer roten Palmölkomponente, ausgewählt aus der Gruppe bestehend aus rotem Palmöl, roten Palmölfraktionen und Kombinationen davon, umfasst.

## Revendications

1. Composition grasse pour friture comprenant au moins 70 % en poids de graisse raffinée ; 3 à 30 % en poids d'un composant d'huile de palme rouge, ledit composant d'huile de palme rouge étant sélectionné dans le groupe constitué de l'huile de palme rouge, de fractions d'huile de palme rouge et de combinaisons de celles-ci ; et 5 à 100 mg/kg, de préférence 6 à 50 mg/kg de β-carotène.

2. Composition grasse pour friture selon la revendication 1, laquelle composition grasse pour friture contient moins de 3 % en poids d'eau.

3. Composition grasse pour friture selon la revendication 1 ou 2, laquelle composition grasse pour friture contient 5 à 25 % en poids d'un composant d'huile de palme rouge, ledit composant d'huile de palme rouge étant sélectionné dans le groupe constitué de l'huile de palme rouge, de fractions d'huile de palme rouge et de combinaisons de celles-ci.

4. Composition grasse pour friture selon la revendication 3, laquelle composition grasse pour friture contient 3 à 20 % en poids d'une fraction oléine d'huile de palme rouge, ladite fraction oléine présentant un indice d'iode au moins égal à 54.

5. Composition grasse pour friture selon la revendication 3, laquelle composition grasse pour friture contient 3 à 12 % en poids d'une fraction super-oléine d'huile de palme rouge, ladite fraction super-oléine présentant un indice d'iode au moins égal à 60.

6. Composition grasse pour friture selon la revendication 4 ou 5, dans laquelle la fraction oléine présente un point de fusion inférieur à 30 °C.

7. Composition grasse pour friture selon l'une quelconque des revendications précédentes, dans laquelle la graisse raffinée et le composant d'huile de palme rouge représentent ensemble au moins 90 % en poids de la composition grasse pour friture.

8. Composition grasse pour friture selon l'une quelconque des revendications précédentes, laquelle composition contient 5 à 100 mg/kg d'a-carotène, 4 à 80 mg/kg de β-carotène, et 20 à 400 mg/kg d'un ou de plusieurs composants de vitamine E sélectionnés dans le groupe constitué des tocophérols et des tocotriénols.

9. Composition grasse pour friture selon l'une quelconque des revendications précédentes, dans laquelle la graisse de la composition grasse pour friture présente une teneur en graisse solide à 20 °C (N₂₀) inférieure à 15 %.

10. Composition grasse pour friture selon l'une quelconque des revendications précédentes, dans laquelle la graisse dans la composition grasse pour friture contient au moins 60 % en poids d'acides gras insaturés.

11. Procédé de préparation d'un aliment frit en immergeant un aliment non frit ou pré-frit pendant au moins 10 secondes dans un milieu de friture présentant une température supérieure à 140 °C, de préférence supérieure à 160 °C, où le milieu de friture se compose de la composition grasse pour friture selon l'une quelconque des revendications précédentes.

12. Procédé selon la revendication 11, dans lequel l'aliment frit est sélectionné dans le groupe constitué des frites, des pommes chips et des beignets.

13. Procédé selon la revendication 11 ou 12, dans lequel le procédé comprend l'immersion d'un aliment non frit dans le milieu de friture pendant au moins 10 secondes pour produire un aliment pré-frit, suivi de l'emballage et de la congélation de l'aliment pré-frit.

14. Procédé de préparation d'une composition grasse pour friture selon l'une quelconque des revendications 1 à 10, ledit procédé comprenant le mélange de 70 parties en poids de graisse raffinée présentant une teneur en β-carotène inférieure à 3 mg/kg avec 2 à 30 parties en poids d'un composant d'huile de palme rouge sélectionné dans le groupe constitué de l'huile de palme rouge, de fractions d'huile de palme rouge et de combinaisons de celles-ci.
